(19) Europäisches Patentamt
European Patent Office
Office européen des brevets

(11) **EP 1 040 869 A2**

(12) **EUROPEAN PATENT APPLICATION**

(43) Date of publication:
**04.10.2000 Bulletin 2000/40**

(51) Int. Cl.$^7$: **B01J 23/52**, C07D 301/10

(21) Application number: **00106321.3**

(22) Date of filing: **23.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.03.1999 JP 8931999**

(71) Applicant:
**Nippon Shokubai Co., Ltd.
Osaka-shi, Osaka 541-0043 (JP)**

(72) Inventors:
• **Hayashi, Toshio
Kobe-shi, Hyogo 651-2242 (JP)**
• **Wada, Masahiro
Nishinomiya-shi, Hyogo 662-0061 (JP)**

(74) Representative:
**MÜLLER & HOFFMANN Patentanwälte
Innere Wiener Strasse 17
81667 München (DE)**

(54) **Gold-containing catalyst and method of manufacturing epoxide using the same**

(57) An epoxide-manufacturing catalyst is composed of a carrier containing a titanium-carrying silica carrier which is made of a silica carrier carrying a titanium compound and fine gold particles fixed to the same, arranged in such a manner that:

(a) an average pore diameter of the silica carrier is in a range between 5 nm and 100 nm; and/or
(b) a relation, A/B<0.3 , is established, where A is a quantity (mol/g) of titanium metal carried by the titanium-carrying silica carrier per unit weight, and B is a quantity (mol/g) of silanol hydroxyl groups in the silica carrier per unit weight.

**EP 1 040 869 A2**

## Description

FIELD OF THE INVENTION

The present invention relates to an epoxide-manufacturing catalyst which is suitably used in manufacturing epoxide by partially oxidizing unsaturated hydrocarbon, and to a method of manufacturing epoxide by partially oxidizing unsaturated hydrocarbon with the use of the above epoxide-manufacturing catalyst.

BACKGROUND OF THE INVENTION

Conventionally, a manufacturing method of epoxide by partially oxidizing unsaturated hydrocarbon in the presence of hydrogen and oxygen with the use of a catalyst made of a titanium-containing oxide and fine gold particles fixed to the same has been known (Japanese Laid-open Patent Application Nos. 127550/1996 (Japanese Official Gazette, *Tokukaihei No. 8-127550*, publishing date: May 21, 1996), 5590/1998 (Japanese Official Gazette, *Tokukaihei No. 10-5590*, publishing date: January 13, 1998), 244156/1998 (Japanese Official Gazette, *Tokukaihei No. 10-244156*, publishing date: September 14, 1998), etc.)

Such a catalyst shows an activity to some extent at the initial stage of an epoxidation reaction, but it becomes less active as the reaction proceeds in time. Thus, the above catalyst has a problem that its activity becomes unsatisfactory once the reaction reaches the normal state. Also, when the above catalyst is used for the epoxidation reaction, there occurs a problem that hydrogen is consumed more than a theoretical quantity.

In order to solve the above problems, a catalyst containing a titanium-containing oxide, namely a titanium-carrying silica carrier which is obtained by calcining a silica carrier carrying a titanium compound, is particularly proposed as a catalyst composed of a titanium-containing oxide and fine gold particles fixed to the same. However, neither physical nor chemical properties required for the silica carrier and titanium-carrying silica carrier to serve as a high-performance catalyst have been made clear.

SUMMARY OF THE INVENTION

The present invention is devised to solve the conventional problems, and therefore, has an object to provide an epoxide-manufacturing catalyst which is suitably used in manufacturing epoxide by partially oxidizing unsaturated hydrocarbon, and a method of manufacturing epoxide by partially oxidizing unsaturated hydrocarbon with the use of the above epoxide-manufacturing catalyst.

The inventors of the present invention conducted an assiduous study of conventional catalysts and manufacturing methods of epoxide. In due course, they discovered that, with a catalyst composed of a carrier containing a titanium-carrying silica carrier which is made of a silica carrier carrying a titanium compound and fine gold particles fixed to the same, physical and chemical properties of the silica carrier and titanium-carrying silica carrier are key factors to its activity and selectivity. Also, an event that the fine gold particles fixed to the titanium-containing oxide have different particle sizes was presumed as one of the reasons why hydrogen is consumed more than a theoretical quantity.

Thus, the inventors conducted further study of an epoxide-manufacturing catalyst and a manufacturing method of epoxide. Consequently, they discovered that satisfactory catalytic performance is attained when an average pore diameter of the silica carrier forming the catalyst or a relation between a quantity (mol/g) of titanium metal carried by the titanium-carrying silica carrier per unit weight and a quantity (mol/g) of silanol hydroxyl groups in the silica carrier per unit weight satisfies predetermined conditions. Further, the inventors completed the present invention when they discovered that if the epoxide-manufacturing catalyst is used, a quantity of consumed hydrogen can be reduced compared with a non-treated catalyst.

In other words, in order to fulfill the above and other objects, an epoxide-manufacturing catalyst of the present invention is a catalyst composed of a carrier containing a titanium-carrying silica carrier which is made of a silica carrier and a titanium compound carried by the silica carrier and fine gold particles fixed to said carrier, and characterized in that an average pore diameter of said silica carrier is in a range between 5 nm and 100 nm.

In order to fulfill the above and other objects, another epoxide-manufacturing catalyst of the present invention is a catalyst composed of a carrier containing a titanium-carrying silica carrier which is made of a silica carrier and a titanium compound carried by the silica carrier and fine gold particles fixed to the carrier, and characterized in that a relation, $A/B < 0.3$, is established, where A is a quantity (mol/g) of titanium metal carried by the titanium-carrying silica carrier per unit weight, and B is a quantity (mol/g) of silanol hydroxyl groups in the silica carrier per unit weight.

The catalyst of the present invention shows satisfactory catalytic performance to obtain epoxide at high yield and high selectivity. To be more specific, it has become possible to provide an epoxide-manufacturing catalyst which shows excellent activity and selectivity, and therefore, can be suitably used in manufacturing epoxide by partially oxidizing unsaturated hydrocarbon, while consuming a less quantity of hydrogen in comparison with conventional catalysts.

In regard to the epoxide-manufacturing catalyst of the present invention, it is preferable that a particle size of the fine gold particles is 10 nm or less.

In order to fulfill the above and other objects, a method of manufacturing epoxide of the present invention is characterized by partially oxidizing unsaturated hydrocarbon in the presence of hydrogen and oxygen with the use of a catalyst composed of a carrier containing a titanium-carrying silica carrier which is made of a silica carrier and a titanium compound carried by the silica carrier and fine gold particles fixed to the carrier with an average pore diameter of the silica carrier being in a range between 5 nm and 100 nm.

Also, in order to fulfill the above and other objects, another method of manufacturing epoxide of the present invention is characterized by partially oxidizing unsaturated hydrocarbon in the presence of hydrogen and oxygen with the use of a catalyst composed of a carrier containing a titanium-carrying silica carrier which is made of a silica carrier and a titanium compound carried by the silica carrier and fine gold particles fixed to said carrier with a relation, A/B<0.3 , being established, where A is a quantity (mol/g) of titanium metal carried by the titanium-carrying silica carrier per unit weight, and B is a quantity (mol/g) of silanol hydroxyl groups in the silica carrier per unit weight.

According to the above methods, not only can epoxide be obtained from unsaturated hydrocarbon at high yield and high selectivity (high conversion ratio), but also a quantity of hydrogen combustion can be reduced, thereby making it possible to reduce a quantity of consumed hydrogen in comparison with conventional methods. In short, it has become possible to provide a method of manufacturing epoxide from unsaturated hydrocarbon at high yield and high selectivity.

The ensuing detailed description will provide a fuller understanding of the nature and advantages of the invention.

DESCRIPTION OF THE EMBODIMENTS

An epoxide-manufacturing catalyst of the present invention is a catalyst composed of a carrier containing a titanium-carrying silica carrier which is made of a silica carrier carrying a titanium compound and fine gold particles fixed to the carrier, and arranged in such a manner that:

(a) an average pore diameter of the silica carrier is in a range between 5 nm and 100 nm; and/or
(b) a relation, A/B<0.3 , is established, where A is a quantity (mol/g) of titanium metal carried by the titanium-carrying silica carrier per unit weight, and B is a quantity (mol/g) of silanol hydroxyl groups in the silica carrier per unit weight.

The silica carrier is not especially limited as long as it includes at least silicon dioxide, and is capable of carrying a titanium compound through oxygen. More specifically, for example, synthetic silica powder made of amorphous silica particles, high density and tight packing porous synthetic silica made of solidified or bonding amorphous silica particles, crystalline porous silica, etc. can be suitably used. Also, MCM41 which is a non-crystalline substance having a regular porous structure can be used as the silica carrier.

A content ratio of silicon dioxide in the silica carrier is not especially limited. However, 50 wt% or greater is generally preferable, 75 wt% or greater is further preferable, and 90 wt% or greater is particularly preferable. A specific surface area of the silica carrier is not especially limited, either. However, 1 $m^2$/g or greater is generally preferable, and a range between 25 $m^2$/g and 1,000 $m^2$/g is further preferable.

Examples of the synthetic silica powder include fumed pyrogenic silica obtained by calcining silicon tetrachloride or silicon tetrafluoride in the presence of hydrogen and oxygen. It is preferable that a specific surface area of the fumed pyrogenic silica is in a range between 50 $m^2$/g and 800 $m^2$/g, and a content ratio of silicon dioxide is 99 wt% or greater. However, these physical properties are not limited to the foregoing. Cab-O-Sil® of Cabot Corp. or Aerosil® of Degussa AG are commercially available as the fumed pyrogenic silica.

Examples of the porous synthetic silica include silica gel and precipitated silica. It is preferable that a specific surface area of the silica gel is in a range between 25 $m^2$/g and 1,000 $m^2$/g, and it is more preferable that a porous volume (a total volume of pores per unit weight) is in a range between 0.3 ml/g and 20 ml/g. It is further preferable that a content ratio of silicon dioxide is 99 wt% or greater. However, these physical properties are not limited to the foregoing.

Examples of crystalline porous silica include high-silica zeolite, and examples of high-silica zeolite include silicalite of petacil-type zeolite.

An average diameter of pores (average pore diameter) of the silica carrier measured by means of mercury gauge is not especially limited as long as a A/B value described below is less than 0.3. In case that the A/B value is 0.3 or greater, the average diameter is in a range between 5 nm and 100 nm both inclusive, preferably in a range between 6 nm and 80 nm both inclusive, and more preferably in a range between 8 nm and 60 nm both inclusive. If the A/B value is 0.3 or greater and the average pore diameter is less than 5 nm or greater than 100 nm, the resulting epoxide-manufacturing catalyst attains poor activity, and therefore, can not be put into practical use. The reason why the activity of the catalyst is deteriorated is not clear. However, one of the reasons is presumed that, if the average pore diameter is too small (less than 5 nm), unsaturated hydrocarbon as a material to be selectively and partially oxidized can not diffuse satisfactorily in the pores. On the other hand, if the average pore diameter is too large (greater than 100 nm), the number of pores is reduced, and a specific surface area of the silica carrier generally becomes as small as 50 $m^2$/g or less. Hence, not much of the fine gold particles and titanium are highly dispersed on the carrier, thereby making the resulting catalyst less active.

A method of preparing a silica carrier having the average pore diameter in the above-specified range and stable structure and heat properties is not especially limited. However, a particularly preferred is a method, by which a silica carrier is prepared with the use of silica xerogel obtained by drying silica hydrogel by a super heat steam method (silica hydrogel is dried by a gas (vapor) heated to a predetermined temperature by a super heater). By using this preferred method, silica xerogel having a large pore volume and excellent heat resistance can be obtained. Further, by calcining the resulting xerogel optionally, its strength, chemical resistance, and water resistance can be improved. The calcining temperature is not especially limited, but a preferable range is between 400°C and 1,000°C. In addition, by applying maturation treatment by steam after the calcination, the physical properties of silica xerogel can be controlled suitably.

A method of manufacturing silica hydrogel to which the super heat steam treatment has not been applied is not especially limited, and any known method is available. For example, a method of neutralizing with an acid an aqueous solution of alkali silicate, such as soda silicate, is available.

A titanium-carrying silica carrier is manufactured by depositing a titanium compound on the silica carrier. Besides the average pore diameter of the silica carrier as described above, a relation of a quantity of titanium metal carried by the titanium-carrying silica carrier and a quantity of silanol hydroxyl groups in the silica carrier is also a key factor to activity and selectivity of the resulting epoxide-manufacturing catalyst. To be more specific, let A be a quantity (mol/g) of titanium metal carried by the titanium-carrying silica carrier per unit weight, and B be a quantity (mol/g) of silanol hydroxyl groups in the silica carrier per unit weight, then a range of a A/B value is restricted as follows by the relation with the average pore diameter. That is, if the average pore diameter is in a range between 5 nm and 100 nm both inclusive, the A/B value is not especially limited. If the average pore diameter is outside of the above-specified range, the A/B value is less than 0.3, and preferably in a range between 0.001 inclusive and 0.3 exclusive.

A case where the average pore diameter is outside of the above-specified range and the A/B value is 0.3 or greater is not preferable, because a quantity of consumed hydrogen with respect to a quantity of produced epoxide increases. The reason why this happens is not clear. However, one of the reasons is presumed that titanium to be fixed to the carrier is not highly diffused, and the resulting catalyst has too dense active sites.

Before the titanium compound is carried, a quantity of silanol hydroxyl groups in the silica carrier per unit weight may be adjusted optionally. An adjusting method is not especially limited, and examples of such a method include the following methods, by which:

(1) the silica carrier is dipped in a water-containing solution (such that is prepared to reach an optimal pH to treat the silica carrier) under a predetermined temperature condition for a predetermined time and then dried;

(2) silica carrier is brought into contact with steam under a predetermined temperature condition for a predetermined time; and

(3) the silanol hydroxyl groups are dehydro-condensed by heating the silica carrier at a predetermined temperature.

Here, the molar number of the silanol hydroxyl groups in the silica carrier can be calculated by, for example, measuring a weight loss of the silica carrier after high temperature calcination (up to 1050°C) as a dehydro-condensed quantity of hydroxyl groups (see JIS K1150 Silica Gel Experiment Method (1994)). Alternatively, a weight loss may be measured by the TG method (thermogravimetric analysis) followed by the same calculation as above.

A method of depositing a titanium compound on the silica surface (including the pores surfaces) is not especially limited, and generally known methods are available. For example, a titanium compound is made into an oxide by means of calcination, etc. after the titanium compound is absorbed or bonded on the surface of the silica carrier by means of impregnation, ion-exchange, chemical vapor deposition, etc.

In case that the titanium compound is supported on the surface of the silica carrier by means of impregnation, for example, the titanium compound is absorbed on the silica surface by placing the silica carrier in a homogeneous solution prepared by dissolving a soluble titanium compound in a solvent, and then removing the solvent. Subsequently, the resulting solid is dried and calcined.

In case that the titanium compound is supported on the silica surface by means of ion exchange, for example, after the silica carrier is placed in a homogeneous solution prepared by dissolving a soluble titanium compound in a solvent, the titanium compound is reacted with silanol hydroxyl groups in the silica carrier so as to fix to the silica carrier. Subsequently, the resulting solid is removed by filtering the solvent, etc., then dried and calcined.

In case that the titanium compound is supported on the silica surface by means of chemical vapor deposition, for example, a volatile titanium compound is made into a vapor state and brought into contact with the silica carrier, so that the titanium compound reacts with silanol hydroxyl groups in the silica carrier and fixes on the silica surface. Then, the resulting solid is calcined.

Preferable examples of the solvent used for impregnation and ion exchange include water, alcohols, ketones, ethers, esters, etc. Examples of alcohols include methyl alcohol, ethyl alcohol, isopropyl alcohol, n-butyl alcohol, octyl alcohol, ethylene glycol, etc.

Examples of ketones include acetone, methyl ethyl ketone, methyl isobutyl ketone, etc. Examples of ethers include tetrahydrofuran, diisobutyl ether, etc. Examples of esters include ethyl acetate, butyl acetate, methyl propionate.

In case of impregnation and ion exchange, it is preferable to wash the resulting solid before it is dried. More specifically, for example, the solid is mixed with a washing solvent in a satisfactory manner, and the step of separating a solid phase and a liquid phase by means of filtration or decantation is repeated as many times as necessary. A temperature at which the solid is washed is not especially limited. However, a range between 0°C and 100°C is preferable and a range between 10°C and 60°C is more preferable. Also, a temperature at which the solid is calcined is preferably in a range between 100°C and 1,050°C, and more preferably in a range between 300°C and 950°C. In addition, the calcination is carried out under any non-reducing atmosphere containing at least one kind of gas selected from oxygen, nitrogen, helium, argon, carbon dioxide, etc.

The titanium compound may be carried both on the surface and internal of the silica carrier depending on the cases. More specifically, examples of such a method include a method, by which a hydroxide (mixed hydroxide) containing titanium and silicon is precipitated out of a homogeneous solution containing a titanium compound and a silicon compound by the coprecipitation process or solgel process, and then the precipitant is turned into an oxide by means of calcination, etc.

The titanium compound supported on the silica carrier is not especially limited. Preferred examples include soluble titanium salts of inorganic acid and organic acid, titanium alkoxides, titanium halides, titanium complexes containing organic compounds, etc.

Examples of titanium salts include tetrakis(2-ethylhexyl)orthotitanate, tetraoctyl orthotitanate, etc. Examples of titanium alkoxides include titanium methoxide, titanium ethoxide, titanium tetraisopropoxide, titanium tetra-n-butoxide, titanium triethanol aminate isopropoxide, etc. Examples of titanium halides include titanium trichloride, titanium tetrachloride, titanium tribromide, titanium tetrabromide, titanium trifluoride, titanium tetrafluoride, etc. Examples of titanium complexes containing organic compounds include titanium bisammonium lactate dihydroxide, titanyl acetylacetonate, titanium diisopropoxide bisacetylacetonate, titanocene dichloride, etc.

Hereinafter, the titanium-carrying silica carrier obtained by the above method is referred to as titanium-containing oxide in some cases. One kind of the titanium-containing oxide or a mixture of two or more kinds of the titanium-containing oxides can be effectively used. The epoxide-manufacturing catalyst of the present invention uses a carrier containing a titanium-containing oxide (titanium-containing oxide itself in some cases) as a carrier carrying fine gold particles.

The titanium-containing oxide may further include at least one kind of element selected from the group consisting of alkali metal, alkali earth metal, lanthanoid, and thallium. Examples of alkali metal include lithium, sodium, potassium, rubidium, cesium, francium, etc. Examples of alkali earth metal include beryllium, magnesium, calcium, strontium, barium, radium, etc. Examples of lanthanoid include lanthanum, cerium, samarium, etc. One member or a mixture of two or more members selected from these examples can be used effectively as occasion demands. Of all the examples, sodium, potassium, rubidium, cesium, magnesium, calcium, strontium, and barium are more preferable than the others. If the titanium-containing oxide further contains the foregoing element(s), not only can the stability of the epoxide-manufacturing catalyst be ensured, but also the useful life can be prolonged further.

In case that the titanium-containing oxide further includes the foregoing element(s), a contained quantity of the element(s) is preferable in a range between 0.001 wt% and 20 wt%, more preferably in a range between 0.005 wt% and 5 wt%, and further preferably in a range between 0.01 wt% and 2 wt%. In case that the titanium-containing oxide contains titanate, such as $MgTiO_3$, $CaTiO_3$, and $BaTiO_3$, the foregoing element(s) can be contained in the titanium-containing oxide in a larger quantity. More specifically, the contained quantity is preferably increased to a range between 0.1 wt% and 50 wt%.

Subsequently, fine gold particles are fixed to the carrier containing the titanium-carrying silica carrier thus obtained. Alternatively, another treatment may be applied to the carrier before the fine gold particles are fixed to the same depending on the cases. Examples of another treatment include a surface treatment, such as a silylating treatment and a hydrophobilizing treatment described below, or a molding treatment by which the carrier is blended with silica sol or binder, and subjected to extrusion molding or kneading molding. However, the treatment is not limited to the foregoing. Also, the foregoing treatments can be applied after the fine gold particles are fixed to the carrier.

The carrier containing the titanium-carrying silica carrier may be manufactured by depositing the titanium-containing oxide on a pre-molded support carry by means of the sol-gel process, keanding, coating, etc.

The fine gold particles are fixed to the carrier (more precisely, the titanium-containing oxide contained in the carrier). Particles having a particle size of 10 nm or less, that is, so-called ultra-fine particles, are suitably used as the fine gold particles. A quantity of gold carried by the titanium-containing oxide based on a total weight of the titanium-containing oxide is preferably 0.001 wt% or greater, more preferably in a range between 0.01 wt% and 20 wt%, and further preferably in a range between 0.05 wt% and 10 wt%. It is not preferable when a quantity of carried gold is less than 0.001 wt%, because the activity of the catalyst is deteriorated. On the other hand, it is not preferable when a quantity of carried gold exceeds 20 wt%, because the activity of the catalyst is hardly improved further in comparison with a case where the gold is carried in the above-specified range, thereby wasting extra gold.

A method of depositing the fine gold particles on the titanium-containing oxide, that is, fixing the former to the latter, is not especially limited, and examples of such a method include precipitation, vapor deposition, impregnation, etc.

The following will explain the procedure of depositing the fine gold particles on the titanium-containing oxide by means of precipitation. Initially, an aqueous solution containing a gold compound (described below) is prepared, and then heated to a temperature in a range between 30°C and 100°C, more preferably in a range between 50°C and 95°C. Then, an alkali aqueous solution, etc. is added to the aqueous solution with stirring until a pH reaches 6-12, and more preferably 7-10. Then, the titanium-containing oxide (or a carrier containing the same) is added to the aqueous solution with stirring at the above temperature at a time or several times within a few minutes. If a pH of the aqueous solution changes, a pH is adjusted to be in the above-specified range by using the alkali aqueous solution, etc.

After the titanium-containing oxide is charged, the aqueous solution is kept stirred for a predetermined time at the above-specified temperature, whereby a solid (solid of fine gold particles and the silica carrier) is obtained as the gold hydroxide is deposited (precipitated) onto the surface of the titanium-containing oxide. The solid is filtered out, washed (rinsed) with water, and then calcined at a temperature in a range between 100°C and 800°C. Consequently, the fine gold particles are supported on the titanium-containing oxide.

An alkali component forming the alkali aqueous solution is not especially limited, and examples of such an alkali component include sodium carbonate, potassium carbonate, sodium hydrocarbonate, sodium hydroxide, potassium hydroxide, cesium hydroxide, ammonia, tetramethyl ammonium hydroxide, etc.

In case of precipitation, an additive can be added optionally to an aqueous solution containing the gold compound to, for example, control a loading quantity or particle size of the fine gold particles, or loaded sites on the titanium-containing oxide. Examples of the additive include metal salts, surfactants, ionic compounds, etc. Examples of metal salts include: metal nitrate, such as sodium nitrate, potassium nitrate, and barium nitrate; metal carboxylic acid salts, such as sodium acetate, potassium propionate, and magnesium citrate; etc. Examples of surfactant include: anionic surfactants, such as sodium laurate, sodium oleate, and sodium lauryl sulfate; cationic surfactants, such as dodecyl trimethyl ammonium chloride; non-ionic surfactants, such as polyethylene glycol and nonyl phenol;

etc. Examples of ionic compounds include hydrochloric acid, nitric acid, sulfic acid, phosphoric acid, carbonic acid, acetic acid, tetramethyl ammonium bromide, etc.

In case of depositing the fine gold particle on the titanium-containing oxide by means of vapor deposition, a volatile gold compound is turned into a vapor state, and then brought into contact with the titanium-containing oxide (or a carrier containing the same), whereby the gold compound is fixed to the surface of the titanium-containing oxide as it reacts with hydroxyl groups on the surface. When calcined later, the fine gold particles are supported on the titanium-containing oxide.

In case of depositing the fine gold particle on the titanium-containing oxide by means of impregnation, the gold compound is fixed onto the surface of the titanium-containing oxide by placing the titanium-containing oxide (or a carrier containing the same) into a homogeneous solution prepared by dissolving a gold compound into a solvent, and then removing the solvent. Subsequently, the resulting solid (solid of fine gold particles and the silica carrier) is dried and calcined, whereby the fine gold particles are supported on the titanium-containing oxide. Alternatively, the gold compound and titanium compound are fixed to the surface of the silica carrier by placing the silica carrier into a homogeneous solution prepared by dissolving the gold compound and titanium compound into a solvent, and then removing the solvent. Subsequently, the resulting solid is dried and calcined. Consequently, the fine gold particles are supported on the titanium-carrying oxide.

Suitable examples of the solvent include water, alcohols, ketones, ethers, and esters. Examples of alcohols include methyl alcohol, ethyl alcohol, isopropyl alcohol, n-butyl alcohol, octyl alcohol, ethylene glycol, etc. Examples of ketones include acetone, methyl ethyl ketone, methyl isobutyl ketone, etc. Examples of ether include tetrahydrofuran, diisopropyl ether, diisobutyl ether, etc. Examples of esters include ethyl acetate, butyl acetate, methyl propionate, etc.

Examples of the gold compound used in the method of fixing the fine gold particles, such as precipitation, vapor deposition, and impregnation, include, but not limited to: water-soluble gold salts represented by, chloroauric acid, such as hydrogen tetrachloroaurate (III)($H[AuCl_4]$), sodium chloroaurate acid, such as sodium tetrachloroaurate (III) ($Na[AuCl_4]$), gold cyanide and potassium gold cyanate, such as gold (I) cyanide (AuCN) and potassium gold (I) dicyanate ($K[Au(CN_2)]$), gold (III) trichloride diethylamine complex (($(C_2H_5)_2NH \cdot [AuCl_3]$), etc; gold complexes, such as ($CH_3$)$_2$Au($CH_3COCHCOCH_3$), ($CH_3$)$_2$Au($CF_3COCHCOCH_3$), ($CH_3$)$_2$Au($CF_3COCHCOCF_3$), ($C_2H_5$)$_2$Au($CH_3COCHCOCH_3$), ($CH_3$)$_2$Au($C_6H_5COCHCOCF_3$), $CH_3AuP(CH_3)_3$, $AuP(CH_3)_3Cl$, $AuP(CH_3)_3NO_3$; etc. The concentration of the gold compound in a solution, such as an aqueous solution, is not especially limited. The gold compound may be in the form of hydrate.

According to the above methods, it has become possible to obtain the catalyst of the present invention suitably used in an epoxidation reaction of unsaturated hydrocarbon which will be described below. The foregoing silylating treatment, hydrophobilizing treatment, molding treatment, etc. may be applied to the catalyst before it is used in the epoxidation reaction.

The silylating treatment and hydrophobilizing treatment can be readily conducted by the actions of a silylating reagent and a hydrophobilizing reagent, respectively. More specifically, for example, the treatment can be conducted by a method, by which the silylating reagent and hydrophobilizing reagent are impregnated into or vapor-deposited to the catalyst. However, such a method is not especially limited.

The silylating reagent is not especially limited, and examples of such a reagent include organic silane, organic silyl amine, organic silazane, etc. Examples of organic silane include chlorotrimethyl silane, dichlorodimethyl silane, chlorobromodimethyl silane, nitrotrimethyl silane, chlorotriethyl silane, chlorodimethyl phenyl silane, dimethylpropyl chlorosilane, dimethyl octyl chlorosilane, tributyl chlorosilane, dimethoxy methyl chlorosilane, methoxytrimethyl silane, dimethoxy dimethyl silane, methytrilmethoxy silane, dimethoxy diphenyl silane, trimethoxy phenyl silane, ethoxy trimethyl silane, ethyl trimethoxy silane, diethoxy dimethyl silane, diethoxy diethyl silane, ethyl triethoxy silane, trimethyl isopropoxy silane, methoxy tripropyl silane, butyl trimethoxy silane, octyl trimethoxy silane, acetoxy trimethyl silane, etc.

Examples of organic silyl amine include dimethylamino trimethylsilane, diethylamino trimethylsilane, N-trimethylsilyl dimethyl amine, bis(dimethylamino)dimethyl silane, methyl silatran, N-trimethyl silylimidazole, N-trimethyl silylpyrrolidine, etc.

Examples of organic silazane include hexamethyl disilazane, heptamethyl disilazane, 1,1,3,3-tetramethyl disilazane, 1,3-diphenyl tetramethyl disilazane, etc.

Examples of other silylating reagents include tetramethoxy silane, tetraethoxy silane, 3-aminopropyl trimethoxy silane, 3-cyanopropyl trichlorosilane, 2-cyanoethyl trimethoxy silane, mercaptomethyl trimethoxy silane, dimethoxy-3-mercaptopropylmethyl silane, 3-mercaptopropyl trimethoxy silane, 3,3,4,4,5,5,6,6,6-nonafluorohexyl trichlorosilane, trimethylsilyl trifluoromethane sulfonate, N,O-bistrimethyl silyl acetoamide, N-trimethyl silyl acetoamido, N,N'-bistrimethyl silyl urea, etc.

The hydrophobilizing reagent is not especially limited, and examples of such a reagent include: fluorine-containing polymers, such as polytetrafluoro ethylene and polyvinylidene fluoride; fluorine-containing compounds, such as trifluoro methyl alcohol, trifuloro acetic acid, and trifuloro methyl ethylene oxide; etc.

The following will explain the procedure to let the catalyst be impregnated with the silylating reagent or hydrophobilizing reagent. Initially, a homogeneous solution is prepared by dissolving the silylating reagent or hydrophobilizing reagent into a solvent, and the catalyst is dipped into the solution for a predetermined time under a predetermined temperature condition, after which the solvent is distilled out.

The solvent used in dissolving the silylating reagent or hydrophobilizing reagent is not especially limited, and can be selected depending on the chemical properties of these reagents. However, alcohols, ketones, ethers, esters, hydrocarbon, etc. are preferable. Examples of alcohols include methyl alcohol, isopropyl alcohol, etc. Examples of ketones include acetone, methyl ethyl ketone, etc. Examples of ethers include diisopropyl ether, tetrahydrofuran, etc. Examples of esters include ethyl acetate, etc. Examples of hydrocarbon include toluene, xylene, etc.

The following will explain the procedure to vapor deposit the silylating reagent or hydrophobilizing reagent to the catalyst. After turning volatile silylating reagent or hydrophobilizing reagent into a vapor state, the gas is brought into contact with the catalyst, whereby the silylating reagent or hydrophobilizing reagent is fixed to the surface of the catalyst (more precisely, the surface of the titanium-containing oxide) as it reacts with hydroxyl groups on the surface.

The manufacturing method of epoxide of the present invention, that is, a reaction manner of a reaction (epoxidation reaction), by which unsaturated hydrocarbon is partially oxidized with the use of the above-arranged epoxide-manufacturing catalyst, is not especially limited. For example, the fixed bed, fluidized bed, movable bed methods are available. It is preferable to conduct the reaction in a vapor phase, but the reaction can be conducted in a liquid phase as well. The following will explain a case where the reaction is conducted in the vapor phase.

Unsaturated hydrocarbon used as a raw material for the above manufacturing method is not especially limited as long as it is a compound including olefin double bond. However, a compound having 2-12 carbon atoms are preferable. Examples of unsaturated hydrocarbon include olefines, such as ethylene, propylene, 1-butene, 2-butene, isobutene, 1-pentene, 2-pentene, 2-methyl-1-butene, 3-methyl-1-butene, cyclopentene, 1-hexene, 2-hexene, 3-hexene, 2-methyl-1-pentene, 3-methyl-1-pentene, 4-methyl-1-pentene, cyclohexene, 1-methyl-1-cyclopentne, and 3-methyl-1-cyclopentene. Corresponding epoxide is generated when the double bond of unsaturated hydrocarbon is oxidized.

A used quantity of the epoxide-manufacturing catalyst is not especially limited, and can be set arbitrary depending on a quantity of loading fine gold particles, the kind of unsaturated hydrocarbon, reaction conditions, etc. However, a suitable quantity is such that a space velocity (SV) of unsaturated hydrocarbon during the reaction will be in a range between 100 hr$^{-1}$ • ml/g • cat. and 30,000 hr$^{-1}$ • ml/g • cat. (space velocity per 1 g of catalyst).

Hydrogen serves as a reducing agent. A used quantity of hydrogen is not especially limited. However, a suitable quantity is such that a volume ratio of hydrogen and unsaturated hydrocarbon (hydrogen/unsaturated hydrocarbon) will be in a range between 1/10 and 100/1. Because a reaction rate increases as the ratio of hydrogen increases, a volume ratio in closer proximity to 100/1 is preferable. Epoxide is produced under low temperature conditions at or below 50°C because of the presence of hydrogen in the reaction series. When hydrogen is absent in the reaction series, a reaction of unsaturated hydrocarbon takes place at or above 200°C, epoxide is hardly produced, and instead, carbon dioxide and water are produced as a result of complete oxidation.

A used quantity of oxygen is not especially limited. However, a suitable quantity is such that a volume ratio of oxygen and unsaturated hydrocarbon (oxygen/unsaturated hydrocarbon) will be in a range between 1/10 and 10/1. Using oxygen less than the above-specified range is not preferable, because yield of epoxide is reduced. On the other hand, using oxygen more than the above-specified range is not preferable either, because yield of epoxide is not improved for an increased quantity and selectivity is reduced compared with a case where oxygen is used in the above-specified range.

In the manufacturing method of epoxide of the present invention, a partial oxidation reaction of unsaturated hydrocarbon proceeds as the epoxide-manufacturing catalyst contacts a raw material gas containing unsaturated hydrocarbon, hydrogen, and oxygen. Thus, for example, a suitable reaction method is a method, by which a reactor is filled with the epoxide-manufacturing catalyst and the raw material gas is flown through the reaction zone. Consequently, a produced gas containing the target object, that is, epoxide, is obtained. The raw material gas may be diluted with an inert gas, such as nitrogen, helium, argon, carbon dioxide, etc. when necessary. A used quantity of the inert gas is not especially limited. The reaction method is not especially limited, either. However, a continuous method is preferable because the above reaction is a so-called gas phase heterogeneous catalyst reaction.

A reaction temperature is not especially limited, and can be set arbitrary depending on the kind of unsaturated hydrocarbon and a combination with the epoxide-manufacturing catalyst, etc. However, a temperature at which unsaturated hydrocarbon and epoxide can remain in a vapor state, for example, a range between 0°C and 350°C is suitable, and a range between 20°C and 280°C is most preferable. A too low reaction temperature is not preferable, because yield of epoxide is reduced. On the other hand, a too high reaction temperature is not preferable either, because unsaturated hydrocarbon and epoxide are completely oxidized, and carbon dioxide and water are generated. Thus, not only selectivity of epoxide is reduced, but also a quantity of consumed hydrogen is increased.

A reaction pressure is not especially limited and can be set arbitrary depending on the reaction conditions, such as the reaction temperature. However, a pressure at which unsaturated hydrocarbon and epoxide can remain in the vapor state, for example, a range between 0.01 MPa and 10 MPa, is preferable. A too low reaction pressure is not preferable, because the yield of epoxide is reduced. On the other hand, a too high reaction pressure is not practical (applicable for industrial use), because although the yield of epoxide is increased, an extra facility, such as a big compressor, is required. A reaction time is not especially limited and can be set depending on the reaction conditions, such as the reaction temperature and reaction pressure.

According to the manufacturing method of epoxide of the present invention, direct oxidation in the vapor phase, that is, vapor phase oxidation reaction, realizes a one step (one stage) reaction procedure, thereby making it possible to obtain epoxide from unsaturated hydrocarbon at high yield and high selectivity (high conversion ratio). In addition, because a quantity of hydrogen combustion can be reduced, a quantity of consumed hydrogen can be reduced compared with the conventional methods. In short, a method of manufacturing epoxide from unsaturated hydrocarbon at high yield and high selectivity can be offered.

In case that a reaction to partially oxidize unsaturated hydrocarbon is conducted in a liquid phase, any of reaction types including batch, semi-batch, continuous running types can be adopted. Preferable reaction temperature and reaction pressure in the liquid phase reaction are a temperature and a pressure at which unsaturated hydrocarbon and epoxide can remain in the vapor state, for example, at 150°C or below and in a range between 0.05 MPa and 10 MPa, respectively.

Alternatively, the reaction may be conducted in the liquid phase by using a solvent inactive to the reaction. Methods of using the solvent are not especially limited, and preferred is a method, by which the raw material gas is bubbled in a suspension liquid prepared by suspending the epoxide-manufacturing catalyst in a solvent. The solvent is not especially limited, and examples of such a solvent include aromatic hydrocarbon, such as benzene, and a hydrocarbon halide, such as methylene chloride. A used quantity of the solvent is not especially limited, either.

The following will explain in detail the present invention by way of Examples and Comparative Examples with no intention to limit the scope thereof.

(Example 1)

Here, 600 ml of a methyl alcohol solution containing 4.1 g of titanyl acetyl acetonate as the titanium compound, and 250 g of a commercially available silica carrier (average pore diameter: 6 nm, specific surface area: 480 $m^2$/g, 10-20 mesh) were charged to a 1 L guitar-shaped flask. Then, methyl alcohol was distilled out using an evaporator under a normal pressure while keeping a water bath temperature at 70°C. After the resulting solid was dried for eight hours at 120°C, the solid was calcined in air at 600°C for three hours, whereby titania-silica was obtained as the titanium-containing oxide (titanium-carrying silica carrier, carrier).

Then, a pH of 300 ml of an aqueous solution containing 0.026 g of chloroauric acid (hydrogen tetrachloroaurate (III)) as the gold compound and 0.15 g of sodium oleate was adjusted to 8 with a sodium hydroxide aqueous solution. Then, 20 g of titania-silica was charged and the aqueous solution was stirred for 30 minutes at 80°C with a pH being kept at 7-8, whereby the titania-silica was suspended and gold precipitant (fine gold particles) was fixed to the surface of the titania-silica.

Then, a supernatant of the suspended liquid was removed, and the residue, that is, a solid (solid of fine gold particles and the silica carrier), was washed three times with 300 ml of water and then filtered, after which the solid was dried for 10 hours at 120°C. Then, the solid was calcined in air at 300°C for three hours, whereby a gold-titania-silica catalyst was obtained as the epoxide-manufacturing catalyst of the present invention.

Then, 2.5 ml of the gold-titania-silica catalyst was filled in a reaction cell with a 10 mm inside diameter. Subsequently, an argon gas containing approximately 9 % of methoxy trimethyl silane vapor was flown through the reaction tube at a flow rate of 6,000 hr⁻¹·ml/g·cat. (conversion value at normal temperature and pressure) while maintaining the catalyst layer at 280°C by an electric furnace, whereby the silylating treatment to the catalyst was employed. Then, a partial oxidation reaction of propylene (unsaturated hydrocarbon) was conducted by using the gold-titania-silica catalyst to which the silylating treatment was applied, and the performance of the catalyst was examined. In other words, the raw material gas was prepared by mixing propylene, hydrogen, oxygen, and argon in a volume ratio (propylene/hydrogen/oxygen/argon) of 20/10/10/60. Then, the reaction cell was dipped in an oil bath kept at 200°C, and the raw material gas was flown through the reaction cell at a flow rate of 5,000 hr⁻¹·ml/g·cat. (conversion value at normal temperature and pressure) under total pressure of 0.3 MPa, whereby an epoxidation reaction of propylene was employed.

Then, a gas at the outlet of the reaction tube was sampled after one hour since the reaction had started, and the composition thereof was analyzed by means of gas chromatography to find the yield (PO yield) of propylene oxide (epoxide), selectivity of propylene oxide (PO selectivity), and a molar ratio of consumed hydrogen and produced propylene oxide (hydrogen/PO molar ratio). Here, the closer to 1 the molar ratio becomes, the less the hydrogen is consumed. The analysis of the reaction results is set forth in Table 1 below with main physical properties of the silica carrier.

(Example 2)

The epoxide-manufacturing catalyst was manufactured in the same manner as Example 1 except that a different silica carrier (average pore diameter: 10 nm, specific surface area: 326 $m^2$/g, 10-20 mesh) was used. Then, after the silylating treatment was applied to the catalyst in the same manner as Example 1, the epoxidation reaction of propylene was conducted by using the catalyst to examine the catalytic performance. The analysis of the reaction results is set forth in Table 1 below with main physical properties of the silica carrier.

(Example 3)

The epoxide-manufacturing catalyst was manufactured in the same manner as Example 1 except that a different silica carrier (average pore diameter: 30 nm, specific surface area: 109 $m^2$/g, 10-20 mesh) was used. Then, after the silylating treatment was applied to the catalyst in the same manner as Example 1, the epoxidation reaction of propylene was conducted by using the catalyst to examine the catalytic performance. The analysis of the reaction results is set forth in Table 1 below with main physical properties of the silica carrier.

(Example 4)

The epoxide-manufacturing catalyst was manufactured in the same manner as Example 1 except that a different silica carrier (average pore diameter: 50 nm, specific surface area: 79 $m^2$/g, 10-20 mesh) was used. Then, after the silylating treatment was applied to the catalyst in the same manner as Example 1, the epoxidation reaction of propylene was conducted by using the catalyst to examine the catalytic performance. The analysis of the reaction results is set forth in Table 1 below with main physical properties of the silica carrier.

(Comparative Example 1)

The epoxide-manufacturing catalyst was manufactured in the same manner as Example 1 except that a different silica carrier (average pore diameter: 3 nm, specific surface area: 560 $m^2$/g, 10-20 mesh) was used. Then, after the silylating treatment was applied to the catalyst in the same manner as Example 1, the epoxidation reaction of propylene was conducted by using the catalyst to examine the catalytic performance. The analysis of the reaction results is set forth in Table 1 below with main physical properties of the silica carrier.

Table 1

| | AVERAGE PORE DIAMETER (nm) | SPECIFIC SURFACE AREA (m²/g) | PO YIELD (mol%) | PO SELECTIVITY (mol%) | HYDROGEN/PO MOLAR RATIO |
|---|---|---|---|---|---|
| EXAMPLE 1 | 6 | 480 | 2.7 | 92 | 4.2 |
| EXAMPLE 2 | 10 | 326 | 4.2 | 90 | 3.8 |
| EXAMPLE 3 | 30 | 109 | 4.5 | 90 | 3.2 |
| EXAMPLE 4 | 50 | 79 | 3.9 | 91 | 3.0 |
| COMP. EXAMPLE 1 | 3 | 560 | 1.8 | 93 | 4.5 |

Table 1 reveals that the epoxide-manufacturing catalysts (Examples 1-4) having the silica carrier with the average pore diameter in a range between 5 nm and 100 nm excel the epoxide-manufacturing catalyst (Comparative Example 1) having the silica with the average pore diameter outside of the above specified range in the PO yield and hydrogen/PO molar ratio. In short, it is understood that the epoxide-manufacturing catalyst of the present invention has excellent catalytic performance (activity) and consumes less hydrogen.

(Example 5)

Here, 600 ml of a methyl alcohol solution containing 2.46 g of titanyl acetyl acetonate as a titanium compound, and 250 g of a commercially available silica carrier (the number of silanol hydroxyl groups: 3.8/nm$^2$, specific surface area: 196 m$^2$/g, (a quantity of silanol hydroxyl groups per unit weight of the silica carrier: 1.24 mmol/g), 10-20 mesh) were charged to a 1 L guitar-shaped flask. Then, methyl alcohol was distilled out using an evaporator under a normal pressure while keeping a water bath temperature at 70°C. After the resulting solid was dried for eight hours at 120°C, the solid was calcined in air at 800°C for three hours, whereby titania-silica was obtained as the titanium-containing oxide (titanium-carrying silica carrier, carrier). A quantity of carried titanium metal per unit weight of the titania-silica was 0.038 mmol/g.

Then, a pH of 300 ml of an aqueous solution containing 0.026 g of chloroauric acid (hydrogen tetrachloroaurate (III)) as the gold compound and 0.15g of sodium laurate was adjusted to 8 with a potassium hydroxide aqueous solution. Then, 20 g of titania-silica was charged and the aqueous solution was stirred for 30 minutes at 80°C with a pH being kept at 7-8, whereby the titania-silica was suspended and gold precipitant (fine gold particles) was fixed to the surface of the titania-silica.

Then, a supernatant of the suspended liquid was removed, and the residue, that is a solid (solid of fine gold particles and the silica carrier), was washed three times with 300 ml of water and then filtered, after which the solid was dried for 10 hours at 120°C. Then, the solid was calcined in air at 300°C for three hours, whereby a gold-titania-silica catalyst was obtained as the epoxide-manufacturing catalyst of the present invention.

Then, 2.5 ml of the gold-titania-silica catalyst was filled in a reaction cell with a 10 mm inside diameter, and a partial oxidation reaction of propylene (unsaturated hydrocarbon) was conducted, and the performance of the catalyst was examined. In other words, a raw material gas was prepared by mixing propylene, hydrogen, oxygen, and argon in a volume ratio (propylene/hydrogen/oxygen/argon) of 30/8/8/54. Then, the reaction cell was dipped in an oil bath kept at 200°C, and the raw material gas was flown through the reaction tube at a flow rate of 6,000 hr$^{-1}$ • ml/g • cat. (conversion value at normal temperature and pressure) under total pressure of 0.5 MPa, whereby an epoxidation reaction of propylene was employed.

Then, a gas at the outlet of the reaction tube was sampled after 30 minutes since the reaction had started, and the composition thereof was analyzed by means of gas chromatography to find the yield (PO yield) of propylene oxide (epoxide), selectivity of propylene oxide (PO selectivity), and a molar ratio (hydrogen/PO molar ratio) of consumed hydrogen to produced propylene oxide. Here, the closer to 1 the molar ratio becomes, the less the hydrogen is consumed. The analysis of the reaction results is set forth in Table 2 below with main physical and chemical properties of the silica carrier and titanium-carrying silica carrier.

(Example 6)

The epoxide-manufacturing catalyst was produced and the epoxidation reaction of propylene was conducted in the same manner as Example 5 except that a used quantity of the silica carrier was reduced to 150 g, and the catalytic performance was examined. The analysis of the reaction results is set forth in Table 2 below with main physical and chemical properties of the silica carrier and titanium-carrying silica carrier.

(Example 7)

The epoxide-manufacturing catalyst was produced and the epoxidation reaction of propylene was conducted in the same manner as Example 5 except that a used quantity of the silica carrier was reduced to 75 g, and the catalytic performance was examined. The analysis of the reaction results is set forth in Table 2 below with main physical and chemical properties of the silica carrier and titanium-carrying silica carrier.

(Example 8)

The epoxide-manufacturing catalyst was produced and the epoxidation reaction of propylene was conducted in the same manner as Example 5 except that a used quantity of the silica carrier was reduced to 37.5 g, and the catalytic performance was examined. The analysis of the reaction results is set forth in Table 2 below with main physical and chemical properties of the silica carrier and titanium-carrying silica carrier.

(Comparative Example 2)

The epoxide-manufacturing catalyst was produced and the epoxidation reaction of propylene was conducted in the same manner as Example 5 except that a used quantity of the silica carrier was reduced to 25 g, and the catalytic performance was examined. The analysis of the reaction results is set forth in Table 2 below with main physical and chemical properties of the silica carrier and titanium-carrying silica carrier.

Table 2

| | QTY OF CARRIED Ti (mmol/g) | QTY OF OH GROUPS (mmol/g) | A/B VALUE | PO YIELD (mol%) | PO SELECTIVITY (mol%) | HYDROGEN/PO MOLAR RATIO |
|---|---|---|---|---|---|---|
| EXAMPLE 5 | 0.038 | 1.24 | 0.030 | 2.9 | 93 | 3.3 |
| EXAMPLE 6 | 0.063 | 1.24 | 0.050 | 3.5 | 92 | 3.0 |
| EXAMPLE 7 | 0.125 | 1.24 | 0.101 | 3.2 | 89 | 3.8 |
| EXAMPLE 8 | 0.289 | 1.24 | 0.233 | 2.7 | 83 | 4.9 |
| COMP. EXAMPLE 2 | 0.376 | 1.24 | 0.303 | 2.4 | 79 | 6.2 |

Table 2 reveals that the epoxide-manufacturing catalysts (Examples 5-8) which satisfy the relation, A/B<0.3 , where A is a quantity (mol/g) of titanium metal carried by the titanium-carrying silica carrier per unit weight, and B is a quantity (mol/g) of silanol hydroxyl groups in the silica carrier per unit weight excel the epoxide-manufacturing catalyst (Comparative Example 2) whose A/B value is outside of the above-specified range in the PO yield, PO selectivity, and hydrogen/PO molar ratio. In short, it is understood that the epoxide-manufacturing catalyst of the present invention has excellent catalytic performance (activity) and consumes less hydrogen.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. An epoxide-manufacturing catalyst composed of a carrier containing a titanium-carrying silica carrier which is made of a silica carrier carrying a titanium compound and fine gold particles fixed to said carrier, wherein an average pore diameter of said silica carrier is in a range between 5 nm and 100 nm.

2. The epoxide-manufacturing catalyst of Claim 1, wherein a particle size of said fine gold particles is 10 nm or less.

3. An epoxide-manufacturing catalyst composed of a carrier containing a titanium-carrying silica carrier which is made of a silica carrier carrying a titanium compound and fine gold particles fixed to said carrier with a relation, A/B<0.3 , being established, where A is a quantity (mol/g) of titanium metal carried by said titanium-carrying silica carrier per unit weight, and B is a quantity (mol/g) of silanol hydroxyl groups in said silica carrier per unit weight.

4. The epoxide-manufacturing catalyst of Claim 3, wherein a particle size of said fine gold particles is 10 nm or less.

5. A method of manufacturing epoxide by partially oxidizing unsaturated hydrocarbon in the presence of hydrogen and oxygen with the use of the epoxide-manufacturing catalyst composed of a carrier containing a titanium-carrying silica carrier which is made of a silica carrier carrying a titanium compound and fine gold particles fixed to said carrier with an average pore diameter of said silica carrier being in a range between 5 nm and 100 nm.

6. A method of manufacturing epoxide by partially oxidizing unsaturated hydrocarbon in the presence of hydrogen and oxygen with the use of the epoxide-manufacturing catalyst composed of a carrier containing a titanium-carrying silica carrier which is made of a silica carrier carrying a titanium compound and fine gold particles fixed to said carrier with a relation, A/B<0.3 , being established, where A is a quantity (mol/g) of titanium metal carried by said titanium-carrying silica carrier per unit weight, and B is a quantity (mol/g) of silanol hydroxyl groups in said silica carrier per unit weight.